# EUROPÄISCHE PATENTSCHRIFT

(11) **EP 2 063 518 B1**
(45) Veröffentlichungstag und Bekanntmachung des Hinweises auf die Patenterteilung: **16.05.2018**
(21) Anmeldenummer: 08105616.0
(22) Anmeldetag: 21.10.2008
(51) Int. Cl.: H02K 41/02, H02K 41/03, H02K 9/02, H02K 33/16

(54) **Linearmotor**
Linear motor
Moteur linéaire

(30) Priorität: 21.11.2007 DE 102007055499
(43) Veröffentlichungstag der Anmeldung: 27.05.2009
(73) Patentinhaber: HILTI Aktiengesellschaft, 9494 Schaan (LI)
(72) Erfinder: Profunser, Dieter, 6800, Feldkirch (AT); Abu Antoun, Chafic, 9470, Buchs (LB)
(74) Vertreter: Hilti Aktiengesellschaft Corporate Intellectual Property

(56) Entgegenhaltungen:
- DE-A1-102004 020 793
- JP-A- 2003 009 503

## Beschreibung

Die Erfindung bezeichnet eine dynamoelektrische Linearkraftmaschine zur hin- und herbewegenden Antrieb eines Läufers, insbesondere einen linear abgewickelten Permanentmagnetschrittmotor oder Reluktanzmotor (im Weiteren kurz Linearmotor genannt) zum Antrieb einer Elektrohandwerkzeugmaschine wie einen Meisselhammer. Der gattungsgemäße Linearmotor, wie im Oberbegriff von Anspruch 1 beschrieben, ist aus der DE 102004020793 A1 und der JP 2003009503 A bekannt.

Ein Linearmotor besteht aus einem Läufer, der in einem axial verzahnten Stator axial hin- und herbewegbar geführt gelagert ist. Im Falle eines abgewickelten Permanentmagnetschrittmotors weist der Läufer axial alternierende Permanentmagnetpole auf, im Falle eines abgewickelten Reluktanzmotors ist auch der Läufer zugeordnet axial verzahnt, wobei auch Mischformen aus beiden möglich sind. Der Stator weist zumindest eine Spule auf, welche von einem Strom durchflossen einen magnetischen Fluss erzeugt, der den Stator und den Läufer durchsetzt, wodurch die Antriebskräfte erregt werden.

Linearmotoren werden in vielen Anwendungen als Stellaktoren verwendet, d.h. ihr Betrieb wird immer wieder von Ruhephasen unterbrochen, in denen sie auskühlen können. Für die Verwendung zum dauerhaften Antrieb einer leistungsfähigen Elektrohandwerkzeugmaschine werden bei begrenztem Maschinenvolumen Antriebsleistungen grösser 1000W benötigt, wodurch hohe Flussdichten und zu deren Erzeugung somit hohe Ströme (> 100A) erforderlich sind. Auf Grund der Ohm'schen und induktiven Verluste in der Spule erwärmt sich diese stark und muss gekühlt werden.

Nach der DE10055078 weist bei einem kompakten Linearmotor in Form eines abgewickelten Reluktanzmotors mit einem koaxial innenliegenden, axial hin- und herbewegbaren Läufer der axial verzahnten Stator zwei Spulen auf, die reifenförmig mit kleiner Randfläche (im Spulenquerschnitt) ausgebildet sind.

Nach der JP2003009503 weist bei einem leistungsarmen Linearmotor in Form eines abgewickelten Permanentmagnetschrittmotors der innenliegende Stator eine Spule aus Folie auf, deren einzelne Windungen direkt Kühlrippen ausbilden, die vollständig von einem hohlprofilförmigen Anker umschlossen direkt von einem kühlenden Luftstrom umströmt werden. Der Linearmotor dient dabei dem Positionierantrieb eines Koordinatentisches. Die Bereiche der Wicklung, die die Kühlfunktion übernehmen, werden aus dem Stator herausgeführt und durch Kröpfung gespreizt, so dass der kühlende Luftstrom zwischen ihnen hindurch geführt werden kann. Zwangsläufig werden die Kupferwicklungen damit gegenüber einem konventionellen Wicklungsaufbau länger. Diese Realisierung eines Kleinmotors mit in sich labilen Folien ist für den Antrieb einer leistungsfähigen Elektrohandwerkzeugmaschine, insbesondere einer vibrierenden, nicht geeignet. Zudem wirkt auf die durch Kröpfung gespreizten Wicklungen ein induziertes Magnetfeld, das bei wechselnder Bestromung zu einer dynamischen Dauerbiegebelastung und somit möglicherweise zum Bruch führt. Die notwendige Kröpfung schliesslich bedingt je Wicklungslage unterschiedliche Wickelquerschnitte und Kröpfungsoperationen, was die Herstellung grosser Stückzahlen unökonomisch macht.

Die Aufgabe besteht in der Realisierung eines Linearmotors hoher Leistung mit effektiver Kühlung. Ein weiterer Aspekt besteht in einer ökonomischen Herstellung.

Die Aufgabe wird im Wesentlichen durch die Merkmale des Anspruchs 1 gelöst. Vorteilhafte Weiterbildungen ergeben sich aus den Unteransprüchen.

So weist ein Linearmotor einen Läufer auf, der axial hin- und herbewegbar in einem Stator geführt gelagert ist, der zumindest eine Spule mit mehreren Wicklungen aufweist, wobei zumindest eine Wicklung eine (grösstenteils) randseitig freiliegende Kühlrippe ausbildet.

Die Kühlrippen sind nach Aussen hin verjüngt, indem diese aus mehreren, sich teilweise überlappenden Wicklungen ausgebildet sind, wodurch sie bezüglich des Wärmeleitungsquerschnitts der abzuführenden Wärmemenge angepasst sind.

Durch randseitig freiliegenden Kühlrippen, die direkt aus den aufeinanderliegenden Wicklungen ausgebildet sind, ist auch bei leistungsfähigen Linearmotoren kompakter Bauweise die durch hohe Ströme bewirkte Abwärme geeignet über einen Luftstrom abführbar. Zudem entfallen bei der Herstellung sämtliche Kröpfoperationen bei der Herstellung.

Vorteilhaft liegt die Kühlrippe am Stator zumindest teilweise aussen frei, wodurch die dort vorliegende gute Zirkulation des Luftstroms nutzbar ist.

Vorteilhaft sind die, weiter vorteilhaft aus Leitkupfer bestehenden, Wicklungen als eigensteife Bleche ausgebildet, wodurch sie auch bei Vibrationen des Linearmotors nur geringe Eigenschwingungen ausführen und somit (durch die Luft) stets voneinander isoliert sind.

Vorteilhaft weisen bei einem (inklusive Isolationsschicht) gegebenen Wicklungsabstand die Kühlrippen eine überstehende Höhe auf, die maximal dem 15-fachen des Wicklungsabstands entspricht, weiter vorteilhaft zwischen dem 3-fachen bis 4-fachen des Wicklungsabstands, wodurch sie hinreichend biegesteif ausgebildet sind.

Vorteilhaft weisen bei einem (inklusive Isolationsschicht) gegebenen Wicklungsabstand die Kühlrippen einen Abstand auf, der zwischen dem 1-fachen bis 10-fachen des Wicklungsabstands entspricht, weiter vorteilhaft zwischen dem 1,5-fachen bis 2-fachen des Wicklungsabstands, wodurch sie hinreichend dem Wärmestrom einer Luftströmung angepasst sind.

Die Erfindung wird bezüglich eines vorteilhaften Ausführungsbeispiels näher erläutert mit:
Fig. 1 als Linearmotor im Längsschnitt
Fig. 2 als Linearmotor im Querschnitt
Fig. 3 als Variante der Wicklung im Querschnitt
Fig. 4 als weitere Variante der Wicklung im Querschnitt

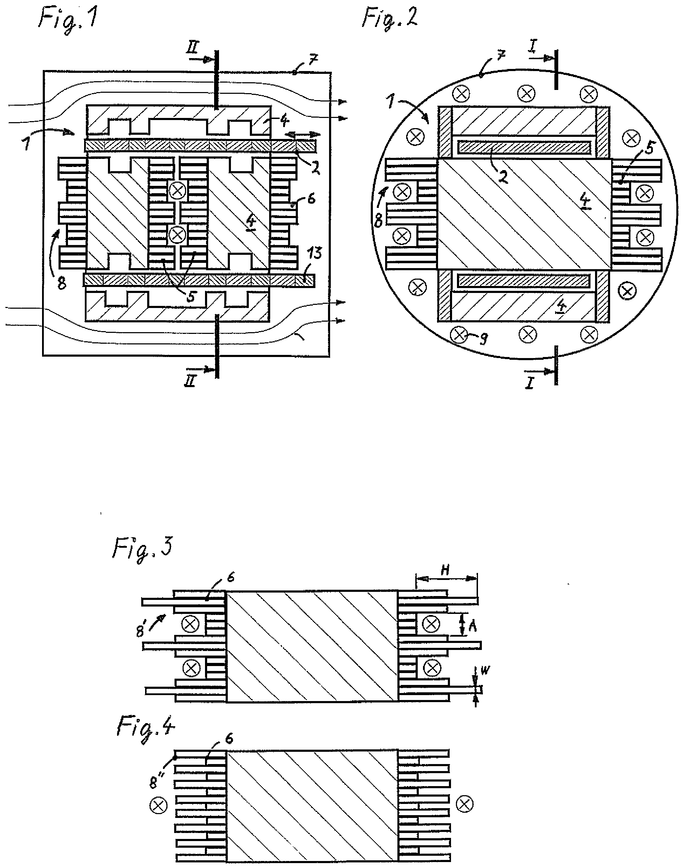

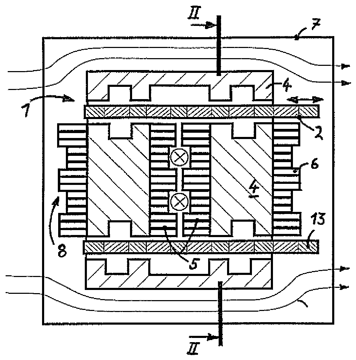

Nach Fig. 1 und Fig. 2 weist ein Linearmotor 1 einen Läufer 2 mit alternierenden Permanentmagneten 13 auf, der axial hin- und herbewegbar in einem teilweise äusseren, axial verzahnten Stator 4 aus Weicheisen geführt gelagert ist. Der Stator 4 weist zwei Spulen 5 mit mehreren (hier 15) Wicklungen 6 aus Leitkupfer in Form von eigensteifen Blechen auf, wobei einige der Wicklungen 6 eine (grösstenteils) randseitig freiliegende Kühlrippe 8 ausbilden, die am Stator 4 aussen freiliegt und von einem Luftstrom 10 direkt an den Wicklungen 6 gekühlt wird. Dabei bilden je drei benachbarte Wicklungen 6 zusammen alternierend eine Kühlrippe 8 oder keine aus. Angeordnet in einem Maschinengehäuse 7 wird der Linearmotor 1 von einem Luftstrom 9 direkt an den Wicklungen 6 gekühlt. Zwischen den beiden Spulen 5 liegt zudem ein querströmender Luftstrom 9 vor.

Nach der Variante in Fig. 3 verjüngt sich die Kühlrippe 8' nach Aussen hin, indem diese aus drei, sich teilweise überlappenden Wicklungen 6 ausgebildet sind. Dabei weisen bei einem durch die Blechstärke (inklusive Isolationsschicht) von 2 mm gegebenen Wicklungsabstand W die Kühlrippen 8 eine überstehende Höhe H auf, die dem 10-fachen des Wicklungsabstands W entspricht, und einen Abstand A, der dem 3-fachen des Wicklungsabstands W entspricht.

Nach der Variante in Fig. 4 bildet jede zweite Wicklung 6 eine Kühlrippe 8' aus, die aus genau einer aussen überragenden Wicklung 6 besteht.

## Patentansprüche

1. Linearmotor mit einem Läufer (2), der axial hin- und herbewegbar in einem Stator (4) geführt gelagert ist, der zumindest eine Spule (5) mit mehreren Wicklungen (6) aufweist, wobei zumindest eine Wicklung (6) eine randseitig freiliegende Kühlrippe (8, 8', 8") ausbildet, **dadurch gekennzeichnet, dass** die Kühlrippen (8') nach Aussen hin verjüngt sind, indem diese aus mehreren, sich teilweise überlappenden Wicklungen (6) ausgebildet sind.

2. Linearmotor nach Anspruch 1, **dadurch gekennzeichnet, dass** die Kühlrippe (8, 8', 8") am Stator (4) zumindest teilweise aussen frei liegt.

3. Linearmotor nach Anspruch 1 oder 2, **dadurch gekennzeichnet, dass** die Wicklungen (6) als eigensteife Bleche ausgebildet sind.

4. Linearmotor nach einem der Ansprüche 1 bis 3, **dadurch gekennzeichnet, dass** bei einem gegebenen Wicklungsabstand (W) die Kühlrippen (8, 8', 8") eine überstehende Höhe (H) aufweisen, die maximal dem 15-fachen des Wicklungsabstands (W) entspricht.

5. Linearmotor nach einem der Ansprüche 1 bis 4, **dadurch gekennzeichnet, dass** bei einem gegebenen Wicklungsabstand (W) die Kühlrippen (8, 8', 8") einen Abstand (A) aufweisen, der zwischen dem 1-fachen und dem 10-fachen des Wicklungsabstands (W) liegt.

6. Linearmotor nach einem der Ansprüche 1 bis 5, **gekennzeichnet durch** eine Anordnung in einem von einem Luftstrom (10) durchströmbaren Maschinengehäuse (7).

## Claims

1. Linear motor, comprising a rotor (2) mounted to be guided in an axially reciprocating manner in a stator (4) having at least one coil (5) with a plurality of windings (6), at least one winding (6) forming a cooling rib (8, 8', 8") exposed at the edges, **characterised in that** the cooling ribs (8') are tapered towards the outside, being formed of a plurality of partially overlapping windings (6).

2. Linear motor according to claim 1, **characterised in that** the cooling rib (8, 8', 8") on the stator (4) is at least partially exposed to the outside.

3. Linear motor according to claim 1 or claim 2, **characterised in that** the windings (6) are designed as inherently rigid sheets.

4. Linear motor according to one of claims 1 to 3, **characterised in that**, for a given winding spacing (W), the cooling ribs (8, 8', 8") have a projecting height (H) corresponding at most to 15 times the winding spacing (W).

5. Linear motor according to one of claims 1 to 4, **characterised in that**, for a given winding spacing (W), the cooling ribs (8, 8', 8") have a spacing (A) that is between one and ten times the winding spacing (W).

6. Linear motor according to one of claims 1 to 5, **characterised by** an arrangement in a machine housing (7) through which an air stream (10) can flow.

## Revendications

1. Moteur linéaire comportant un rotor (2) monté de manière guidée et axialement mobile en va-et-vient dans un stator (4) qui comporte au moins une bobine (5) ayant plusieurs enroulements (6), dans lequel au moins un enroulement (6) forme une ailette de refroidissement (8, 8', 8") ouverte au niveau de ses bords, **caractérisé en ce que** les ailettes de refroidissement (8') sont rétrécies vers l'extérieur, celles-ci étant formées à partir de plusieurs enroulements (6) partiellement chevauchants.

2. Moteur linéaire selon la revendication 1, **caractérisé en ce que** l'ailette de refroidissement (8, 8', 8") sur le stator (4) est au moins en partie ouverte sur l'extérieur.

3. Moteur linéaire selon la revendication 1 ou 2, **caractérisé en ce que** les enroulements (6) sont formés à partir de tôles intrinsèquement rigides.

4. Moteur linéaire selon l'une des revendications 1 à 3, **caractérisé en ce que** pour un espacement entre enroulements (W) donné, les ailettes de refroidissement (8, 8', 8") ont une hauteur de saillie (H) qui correspond au maximum à 15 fois l'espacement entre enroulements (H).

5. Moteur linéaire selon l'une des revendications 1 à 4, **caractérisé en ce que** pour un espacement entre enroulements (W) donné, les ailettes de refroidissement (8, 8', 8") ont une distance (A) qui est comprise entre 1 fois et 10 fois l'espacement entre enroulements (W) .

6. Moteur linéaire selon l'une des revendications 1 à 5, **caractérisé par** un agencement dans un carter de machine (7) à travers lequel un flux d'air (10) peut s'écouler.
